# FASCICULE DE BREVET EUROPEEN

(11) **EP 2 205 947 B1**
(45) Date de publication et mention de la délivrance du brevet: **11.03.2020**
(21) Numéro de dépôt: 08844026.8
(22) Date de dépôt: 23.10.2008
(51) Int. Cl.: G01F 15/00, G01F 15/06

(54) **COMPTEUR POURVU DE MOYENS DE DETECTION DE FRAUDE OU DE TENTATIVE DE FRAUDE**
ZÄHLER, DER MIT ELEMENTEN ZUR ENTDECKUNG VON BETRUG ODER VON VERSUCHTEM BETRUG AUSGESTATTET IST
METER PROVIDED WITH MEANS FOR DETECTING FRAUD OR ATTEMPTED FRAUD

(30) Priorité: 30.10.2007 EP 07301512
(43) Date de publication de la demande: 14.07.2010
(73) Titulaire: Itron Global SARL, Liberty Lake WA 99019 (US)
(72) Inventeur: BOUZID, Tarek, 71000 Macon (FR); BERTORELLO, Flavio, 12040 Govone (IT); WILS, Pierre, 63120 Sauviat (FR)
(74) Mandataire: Howson, Richard Giles Bentham
(86) Numéro de dépôt international: PCT/EP2008/064350
(87) Numéro de publication internationale: WO 2009/056480

(56) Documents cités:
- EP-A- 1 564 533
- EP-A- 1 577 650
- WO-A-94/29677
- US-B1- 6 588 447

## Description

L'invention concerne un compteur, en particulier un compteur de fluide, pourvu de moyens de détection de fraude ou de tentative de fraude.

Les compteurs de fluide sont destinés à mesurer la quantité ou le débit de fluide consommé par un abonné. Pour des raisons diverses et bien entendu pour diminuer le montant de leurs factures, certains abonnés essaient de freiner ou même d'arrêter l'enregistrement de leur consommation. Ces fraudes peuvent prendre diverses formes.

Une de ces méthodes de fraude consiste à exercer une pression sur la face supérieure du capot du totalisateur de façon à freiner ou à arrêter son fonctionnement. Les fraudeurs utilisent un outil, tel qu'un serre-joint, pour exercer cette pression. Le corps du compteur étant en laiton ou en matière plastique très résistant, la partie la plus sensible à l'écrasement est le totalisateur et notamment sa vitre supérieure de visionnement de la consommation. A proximité de cette vitre se trouve un mécanisme d'engrenage du totalisateur. Les fraudeurs essaient de freiner ou d'arrêter ce mécanisme en exerçant cette pression sur le mécanisme, à proximité de la vitre. Lorsque le serre-joint est enlevé, il n'y a pas de trace de la fraude si la vitre n'est pas endommagée, ce qui est souvent le cas car la vitre est généralement réalisée en matériau relativement élastique, tel que le polycarbonate.

Le document de brevet EP 1 326 061 divulgue une solution à ce problème. Des lignes de rupture sont ménagées sur la surface supérieure du capot recouvrant le totalisateur du compteur, au droit du disque indicateur. Lorsque la tentative de fraude vise à bloquer ce disque, par pression comme évoqué plus haut, la rupture de cette zone témoigne de cette tentative de fraude.

Par ailleurs, les compteurs sont actuellement souvent associés à un module de télé relevé, qui est destiné au relevé à distance de la consommation et qui est installé sur des compteurs déjà installés. Pour ce faire, il peut être prévu une cavité d'encastrement ménagée sur la face supérieure du capot du totalisateur et dans laquelle est dispose précisément le module, afin d'assurer un positionnement précis de l'agencement de lecture du module par rapport a un agencement interne au totalisateur et assurant la détection de la consommation, par exemple le disque indicateur. Cette détection peut être effectuée de façon optique, capacitive, inductive ou autre, par exemple en scrutant le &placement du disque indicateur. Un tel compteur avec module associe est décrit par exemple dans le document de brevet EP 1 026 481.

Dans le cas d'un tel compteur avec module associe, la détection de fraude telle qu'évoquée plus haut est encore plus critique. En effet, afin d'assurer une lecture correcte par le module, l'organe de comptage interne au totalisateur, par exemple le disque indicateur, doit être installe le plus près possible du capot ou de la vitre le recouvrant. Il en résulte que la fraude par pression est facilitée, car peu d'effort suffit pour bloquer le &placement de l'organe de comptage.

Le document de brevet EP 1 564 533 décrit l'agencement d'une surface témoin en matériau dont l'allongement a la rupture est faible, placée en regard d'au moins une partie du totalisateur et qui peut faire partie d'un élément dit module témoin interchangeable.

Le but de l'invention est d'assurer une telle détection de la tentative de fraude comme évoque plus haut, tout en facilitant la mise en place d'un module de télé relevé.

Pour ce faire, l'invention propose un compteur de fluide selon la revendication 1.

L'invention concerne également, un procédé d'installation d'un module de télé relevé sur un tel compteur, selon la revendication 3.

L'invention est décrite ci-après plus en détail à l'aide de figures .
Les figures 1 à 3 sont des vues en perspective illustrant un premier mode de réalisation de l'invention.
Les figures 4 à 6 sont des vues en perspective illustrant un second mode de réalisation utile à la compréhension de l'invention.
La figure 7 est une vue de détail en perspective de ce second mode de réalisation utile à la compréhension de l'invention.

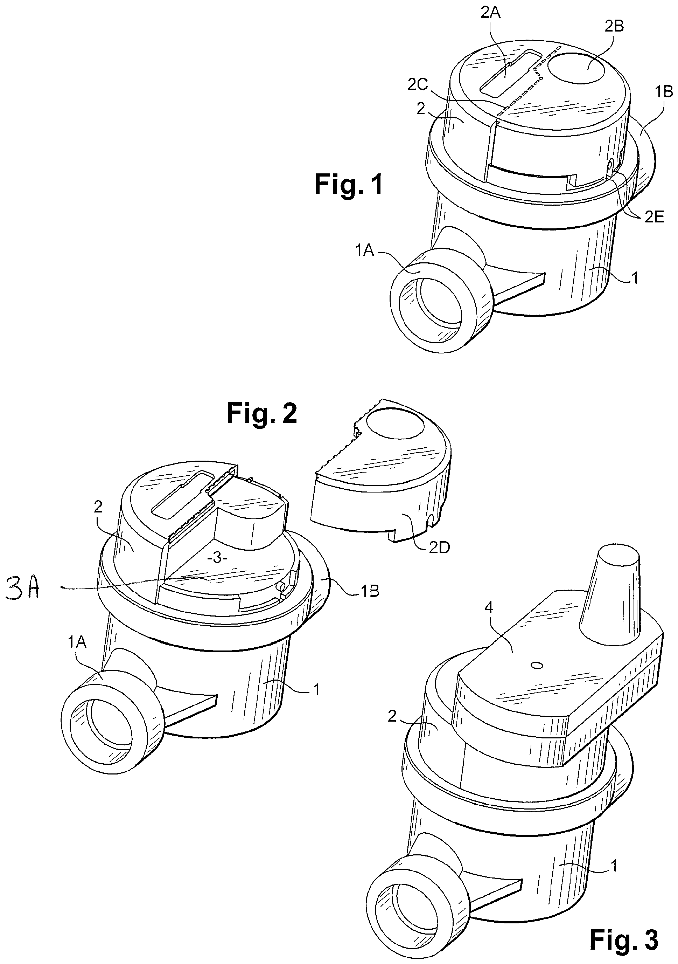

La figure 1 représente un compteur de fluide, en particulier d'eau, selon un premier mode de réalisation de l'invention. Ce compteur comporte une bâche 1 pourvue d'un tronçon de conduite d'entrée 1A et un tronçon de conduite de sortie 1B de l'eau. Dans cette bâche 1, se trouve de façon connue un élément mesurant ou une chambre de mesure, par exemple à turbine ou à piston oscillant. La quantité de fluide ainsi mécaniquement mesurée est transmise à un totalisateur dispose au-dessus de la chambre de mesure, couvert et fixe par un capot 2. Ce capot comporte une fenêtre 2A de visualisation d'un élément de comptage de type index a tambours numérotés et une vitre 2B de visualisation d'un disque indicateur.

Ce capot 2 présente un agencement de rupture ménagé sur sa surface supérieure, destine à la détection de fraude, constitue d'une ligne de rupture 2C agencée dans la paroi du capot. Lorsqu'une tentative de fraude vise à bloquer le disque indicateur, par pression comme évoqué plus haut, la rupture, totale ou partielle, de cette ligne de rupture 2C témoigne de cette tentative de fraude.

Par ailleurs, la ligne de rupture 2C est disposée au droit d'une cavité de réception 3 d'un module de télé relevé 4, délimitée par une paroi 3A. Lorsque le module 4 est destiné à être installé sur le compteur, le technicien habilité casse volontairement la ligne de rupture 2C et enlève la partie 2D ainsi séparée du capot, comme illustré sur la figure 2. La cavité de réception 3 est alors libérée et le module de télé relevé 4 peut être installé par encastrement partiel dans cette cavité, comme illustré sur la figure 3.

Solidaire du capot 2, la partie 2D constitue donc un élément de recouvrement de la cavité d'encastrement 3. Outre la ligne de rupture 2C, elle est également connectée au capot 2 par deux tenons 2E disposés à proximité de la bâche 1. L'enlèvement de cette partie 2D peut ainsi être réalisée aisément par insertion d'un outil, tel un tournevis, dans la fente à proximité de ces tenons puis écartement et rupture des tenons 2E et de la ligne de rupture 2C.

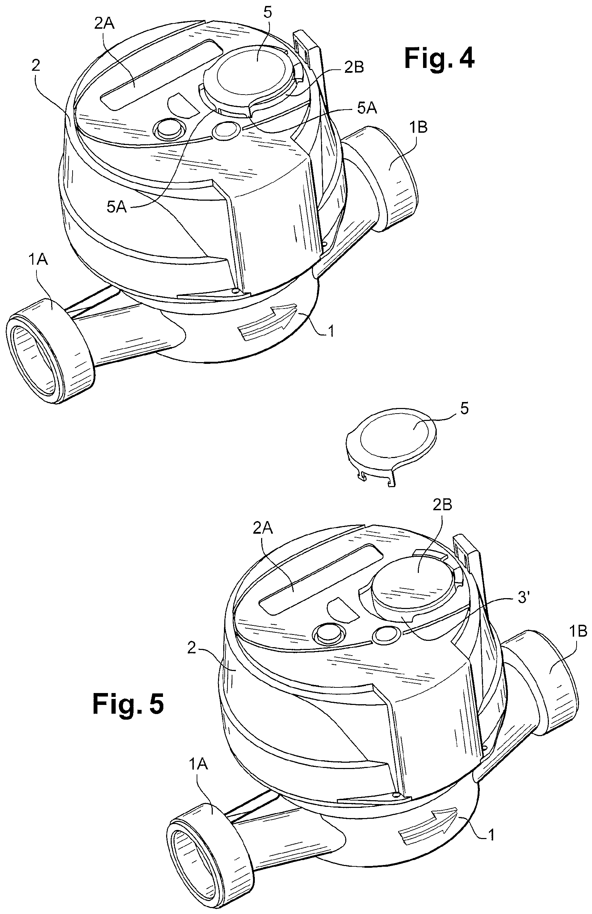

La figure 4 représente un compteur de fluide, en particulier d'eau, selon un second mode de réalisation utile à la compréhension de l'invention. Ce compteur comporte une bâche 1 pourvue d'un tronçon de conduite d'entrée 1A et un tronçon de conduite de sortie 1B de l'eau. Dans cette bâche 1, se trouve de façon connue un élément mesurant ou une chambre de mesure, par exemple à turbine ou à piston oscillant. La quantité de fluide ainsi mécaniquement mesurée est transmise à un totalisateur disposé au-dessus de la chambre de mesure, couvert et fixé par un capot 2. Ce capot comporte une fenêtre 2A de visualisation d'un élément de comptage de type index à tambours numérotés et une vitre ou une fenêtre 2B de visualisation d'un disque indicateur.

Ce capot 2 présente un agencement de rupture ménagé sur sa surface supérieure, destiné à la détection de fraude, constitué d'un élément de recouvrement 5 connecté au capot par plusieurs tenons sécables 5A. Lorsqu'une tentative de fraude vise à bloquer le disque indicateur, par pression comme évoqué plus haut, la rupture, totale ou partielle, de ces tenons 5A témoigne de cette tentative de fraude.

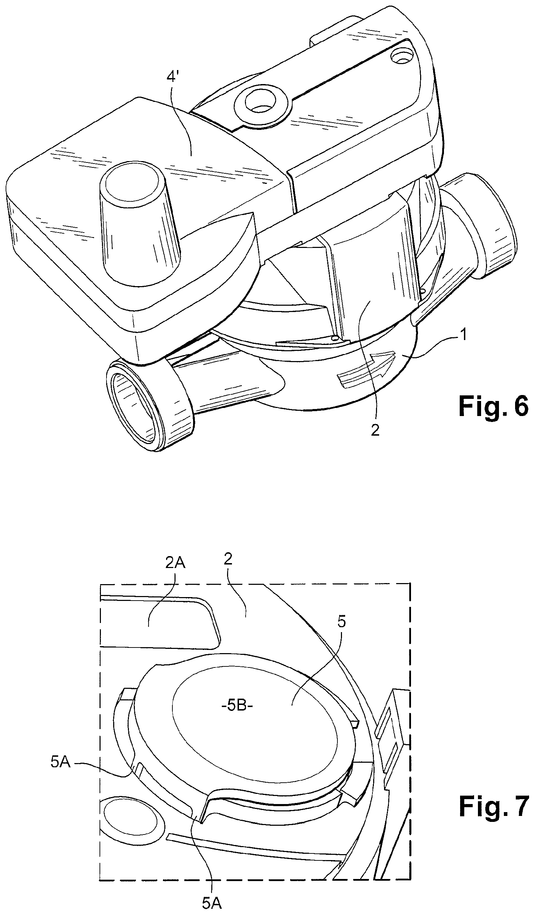

Par ailleurs, cet élément de recouvrement 5 est disposé au droit d'une partie de réception 3' d'un module de télé relevé 4', à savoir au droit du disque indicateur interne au totalisateur. Lorsque le module 4' est destiné à être installé sur le compteur, le technicien habilité casse volontairement les tenons 5A et enlève l'élément de recouvrement 5 ainsi séparé du capot, comme illustré sur la figure 5. La partie de réception 3' est alors libérée et le module de télé relevé 4' peut être installé par positionnement sur cette partie de réception, sur le disque indicateur, comme illustré sur la figure 6.

Quel que soit le mode de réalisation, une fois le module installé sur le compteur, il protège ce dernier de la fraude par pression de type serre-joint.

La figure 7 représente plus en détail cet élément de recouvrement 5 qui est un disque en matière plastique comportant au moins une zone transparente 5B pour la visualisation du disque indicateur et qui peut être moulé d'une seule pièce avec le capot 2. Il est connecté au capot 2 par plusieurs tenons 5A, de préférence répartis sur sa périphérie, qui peuvent être facilement cassés, par pression ou action de type levier sur l'élément de recouvrement 5.

## Revendications

1. Compteur de fluide comportant un totalisateur (1) comportant un organe de comptage et un capot (2), ce capot intégrant un élément de recouvrement (2D) connecté au capot par au moins deux tenons sécables (2E) et une ligne de rupture (2C) destinée à la détection de fraude, où ledit élément de recouvrement (2D) recouvre une cavité de réception d'un module de télé-relevé (4), ledit totalisateur comprenant une paroi (3A) délimitant ladite cavité de réception, et où ladite ligne de rupture (2C) est agencée dans la paroi du capot (2) et disposée au droit de ladite cavité de réception, de manière que l'élément de recouvrement puisse être séparé du capot après rupture volontaire de ladite ligne de rupture et desdits tenons sécables.

2. Compteur selon la revendication précédente, **caractérisé en ce que** ladite cavité de réception est une cavité d'encastrement (3) dudit module.

3. Procédé d'installation d'un module de télé-relevé sur un compteur selon l'une des revendications précédentes, **caractérisé en ce qu'**il comporte les étapes suivantes: détachement volontaire du dit élément de recouvrement par rupture volontaire de ladite ligne de rupture et desdits tenons sécables et mise en place du module de télérelevé dans ladite cavité de réception ainsi libérée.

## Patentansprüche

1. Fluidzähler, umfassend ein Zählwerk (1), das ein Zählglied und eine Kappe (2) umfasst, wobei diese Kappe ein mittels mindestens zwei trennbaren Zapfen (2E) verbundenes Abdeckelement (2D) und eine zum Entdecken von Betrug bestimmte Sollbruchlinie (2C) aufweist, wobei das Abdeckelement (2D) einen Hohlraum zur Aufnahme eines Fernablesemoduls (4) bedeckt, wobei das Zählwerk eine Wand (3A) umfasst, die den Aufnahmehohlraum begrenzt, und wobei die Sollbruchlinie (2C) in der Wand der Kappe (2) platziert und im Bereich des Aufnahmehohlraums angeordnet ist, derart, dass das Abdeckelement nach Sollbruch der Sollbruchlinie und der trennbaren Zapfen von der Kappe getrennt werden kann.

2. Zähler nach dem vorhergehenden Anspruch, **dadurch gekennzeichnet, dass** der Aufnahmehohlraum ein Hohlraum (3) zum Einsetzen des Moduls ist.

3. Verfahren zum Installieren eines Fernablesemoduls auf einen Zähler nach einem der vorhergehenden Ansprüche, **dadurch gekennzeichnet, dass** es die folgenden Schritte umfasst: absichtliches Loslösen des Abdeckelements durch Sollbruch der Sollbruchlinie und der trennbaren Zapfen und Anordnen des Fernablesemoduls in den so freigelegten Aufnahmehohlraum.

## Claims

1. Fluid meter comprising a counter (1) comprising a counting member and a cap (2), this cap incorporating a covering element (2D) connected to the cap by at least two breakable tenons (2E) and a break line (2C) designed for detecting fraud, wherein said covering element (2D) covers a cavity for receiving a remote-meter-reading module (4), said counter comprising a wall (3A) delimiting said receiving cavity, and wherein said break line (2C) is arranged in the wall of the cap (2) and arranged in line with said receiving cavity such that the covering element is able to be separated from the cap after intentional breakage of said break line and of said breakable tenons.

2. Meter according to the preceding claim, **characterized in that** said receiving cavity is a cavity (3) into which said module is fitted.

3. Method for installing a remote-meter-reading module on a meter according to one of the preceding claims, **characterized in that** it comprises the following steps: intentional detachment of said covering element by intentional breakage of said break line and of said breakable tenons and placement of the remote-meter-reading module in said receiving cavity thus released.
